# EUROPEAN PATENT SPECIFICATION

(11) **EP 3 423 946 B1**
(45) Date of publication and mention of the grant of the patent: **15.12.2021**
(21) Application number: 17705003.6
(22) Date of filing: 08.02.2017
(51) Int. Cl.: G06F 12/0811, G06F 12/0888, G06F 12/1027, G06F 12/126, G06F 12/0831, G06F 12/0871

(54) **WRITE-ALLOCATION FOR A CACHE BASED ON EXECUTE PERMISSIONS**
SCHREIBZUWEISUNG FÜR EINEN CACHESPEICHER AUF DER GRUNDLAGE VON AUSFÜHRUNGSBERECHTIGUNGEN
ATTRIBUTION D'ÉCRITURE POUR MÉMOIRE CACHE BASÉE SUR DES AUTORISATIONS D'EXÉCUTION

(30) Priority: 01.03.2016 US 201615057121
(43) Date of publication of application: 09.01.2019
(73) Proprietor: Qualcomm Incorporated, San Diego, CA 92121-1714 (US)
(72) Inventor: SARTORIUS, Thomas Andrew, San Diego, California 92121-1714 (US); DIEFFENDERFER, James Norris, San Diego, California 92121-1714 (US); MORROW, Michael William, San Diego, California 92121-1714 (US); BRIDGES, Jeffrey Todd, San Diego, California 92121-1714 (US); MCILVAINE, Michael Scott, San Diego, California 92121-1714 (US); SMITH, Rodney Wayne, San Diego, California 92121-1714 (US); DOCKSER, Kenneth Alan, San Diego, California 92121-1714 (US); SPEIER, Thomas Philip, San Diego, California 92121-1714 (US)
(74) Representative: Tomkins & Co
(86) International application number: PCT/US2017/016971
(87) International publication number: WO 2017/151280

(56) References cited:
- EP-A1- 1 304 620
- EP-A1- 1 304 620
- EP-A2- 0 989 496
- GB-A- 2 526 849
- GB-A- 2 526 849
- US-A- 5 606 687
- US-A- 5 606 687
- US-A- 5 623 619
- US-A1- 2007 079 070
- US-A1- 2007 094 475

## Description

### Field of Disclosure

Disclosed aspects are directed to managing cache allocation in processing systems. More specifically, exemplary aspects are directed to write-allocation in a unified cache based on execute permissions.

### Background

Modern processors may include one or more levels of cache memories (or simply, "caches"), which are designed to be high-speed memories. The information stored in a cache (or "cached information") can include data, instructions, or a combination thereof. Depending on the type of cached information, caches may be classified as a data cache (D-cache), instruction cache (I-cache), or a combined data and instruction cache (also known as a "unified cache").

The process of accessing a cache can involve a processor making a read or write request for particular information, and checking the cache to see if the requested information is present. If the information is present, then a cache "hit" is said to occur, and if the information is not present, then a cache "miss" is said to occur. Depending on whether the request is for a read or a write, the hit or miss may be more particularly referred to as a read-hit/read-miss or a write-hit/write-miss.

In more detail, in the case of a read-hit, an entry (hitting entry) is present in the cache, corresponding to an address associated with the information requested by the processor; and the information is read from the hitting entry and returned to the processor from the cache. In the case of a write-hit, once again a hitting entry is present in the cache, corresponding to an address to which the processor desires to write the information; and the processor writes the information to the hitting entry in the cache. The cases of read-miss and write-miss may be handled in different ways, as will be explained below.

A read-miss occurs when the processor accesses the cache to read information from an entry but the entry is not present in the cache. To service the read-miss, the desired information is read from another cache or backing storage location, and then supplied to the processor, and the desired information may also be placed into an entry of the cache. Placing the desired information into an entry of the cache (either by creating a new entry or replacing an existing entry with the desired information) is referred to as allocation. Conventionally, allocation may be performed on a read-miss (assuming other criteria such as access permissions, which will be described in the following sections, are met).

However, in different implementations, write-misses may or may not entail allocation. Considering a write-miss in more detail, a write-miss involves accessing the cache to write information to a particular entry, but the entry is not present in the cache. A write-miss may be serviced with a write-allocate policy or a write-no-allocate policy. A write-allocate policy involves bringing in a cache-line-sized block stored at an address associated with the write request (e.g., from a backing storage location) into an entry of the cache (allocation) and storing the desired write information into the allocated entry. Using a write-allocate policy can improve performance if/when subsequent read requests are made to the allocated entry, because the corresponding read accesses will result in a read-hit in the cache. Performance may be improved for subsequent write accesses to the allocated entry, because the subsequent write accesses will also result in a write-hit, wherein corresponding write information can update the allocated entry without involving accesses to backing storage locations (keeping in mind that a "write-through" policy where write information is updated in backing storage locations even in the case of a write-hit may nevertheless involve such accesses to backing storage locations).

Under a write-no-allocate policy, servicing a write-miss in the cache may involve proceeding to check backing storage locations for an address corresponding to the write information, without subsequently updating or allocating the cache. This means that an allocated entry will not be created and so subsequent write requests to the unallocated entry will also miss. As previously described, read-misses may result in allocation, and so, unless the entry is allocated based on a subsequent read access, subsequent write requests will continue to result in a write-miss and proceed with a write-no-allocate policy. A write-no-allocate policy may be implemented in environments where information written is not likely to have temporal locality with information that is read. For example, where the cache is a D-cache, a write-no-allocate policy may be in place where a program executed by the processor is not likely to read data that was written relatively recently. Thus, allocating an entry upon a write-miss may be avoided, which can improve performance in such cases.

A combination of write-allocate and write-no-allocate policies, also referred to as a "mixed allocation policy," may be used in some implementations. In a mixed allocation policy, such as those discussed in US 5,606,687 and EP 1 304 620, write-allocation can vary based on the addresses associated with read/write requests. The addresses may belong to different pages of memory, with each memory page being associated with a different allocation policy. The allocation policy attribute for a desired read/write memory access can be stored in and retrieved from a memory management unit (MMU) as known in the art, for example, in a page table entry (PTE) for the memory access. Accordingly, whether or not a write-miss results in a write-allocate or write-no-allocate may be decided based on a configuration or allocation policy attribute associated with the write request from the PTE.

As previously mentioned, memory access operations may also be influenced by additional criteria, such as access permissions. For example, each memory page may have associated permissions which may affect read and write operations for addresses belonging to the memory page. A PTE associated with an address may be used by an MMU in determining whether a read or write access desired by a processor has corresponding read or write permissions, depending on which the read or write access, respectively, may be allowed to proceed. Thus, if access permission exists for a particular address (i.e., read permission exists for a read operation or write permission exists for a write operation), then the corresponding access operation (read or write, respectively) may be permitted.

Accordingly, determining whether an access operation for an address may result in cache allocation may involve first determining whether corresponding access permission exists, because if access permission does not exist, then the access operation may not be permitted and therefore the question of allocation may not arise; and if access permission does exist, then allocation may be based on particular allocation policies which may be in place for the address. For example, in the case of a write operation, determining the write-allocation policy for a write-miss in a cache may be a two-step process, wherein the first step may involve determining whether or not write permissions exist for the purported write operation. If write permission exists, then the second step may involve determining whether to write-allocate or write-no-allocate if there is a write-miss in the cache. If in the first step it is determined that write permission does not exist, then the question of cache allocation may be moot because the write operation may not be permitted and the cache may not be accessed.

In addition to read and write permissions, yet another type of permission which may be associated with a memory address or a memory page may pertain to "execute" permissions. Execute permissions may relate to instructions stored in memory, wherein, if an address at which an instruction is stored has execute permissions, the instruction may be executed; otherwise, the instruction may not be executed by a particular program. Some memory pages, such as those targeted by code generators, just-in-time (JIT) compilers and other programs which may involve reading/writing, as well as executing instructions, may have read/write permissions as well as execute permissions enabled. Code generators may write compiled programs to memory pages which have read, write, and execute permissions, and thereafter, retrieve the compiled programs from these memory pages for execution.

Thus, it can be appreciated that a unified cache which can store data as well as instructions, may have read, write, and execute permissions associated with entries of the unified cache. Conventional implementations may take into account read and write permissions in determining whether memory access is allowed. However, known approaches do not consider execute permissions in determining write-allocation policies for write accesses which miss in unified caches.

### SUMMARY

Exemplary aspects of this disclosure are directed to systems and methods for managing access to a cache, which may be configured as a unified cache for storing data as well as instructions. One or more execute permissions associated with a write-address of a write-request to the cache may be determined, for example, by using logic such as a memory management unit (MMU). If there is a write-miss in the cache for the write-request, a cache controller may determine whether to implement a write-allocate policy or a write-no-allocate policy for servicing the write-miss, based on the one or more execute permissions.

In some aspects, the one or more execute permissions associated with the write-address can pertain to execute permissions for one or more privilege levels applicable to the write-address, such as a user privilege level, a supervisor privilege level, etc. A producing agent which generated the write-request and a consuming agent which can potentially execute from the write-address may each have a privilege level selected from the one or more privilege levels. At the time of servicing the write-miss, the producing agent, as well as, the privilege level of the producing agent may be known; however, the potential consuming agent may not be known, and therefore, the associated privilege level of the potential consuming agent may not be known. Accordingly, in some aspects, the write-allocation policy for a write-miss may be based on (e.g., a function of) execute permissions associated with the privilege level of the producing agent and/or execute permissions associated with any other privilege level for the write-address.

For example, an exemplary aspect is directed to a method for managing a cache, the method comprising determining one or more execute permissions associated with a write-address of a write-request to the cache. If there is a write-miss in the cache for the write-request, a determination of whether to implement a write-allocate policy or a write-no-allocate policy for servicing the write-miss is based on the one or more execute permissions.

Another exemplary aspect is directed to an apparatus comprising a cache, logic configured to determine one or more execute permissions associated with a write-address of a write-request to the cache, and a cache controller configured to implement a write-allocate or a write-no-allocate policy for the write-request based on the one or more execute permissions, if there is a write-miss in the cache for the write-request.

Another exemplary aspect is directed to an apparatus comprising means for determining one or more execute permissions associated with a write-address of a write-request to a cache, and means for implementing a write-allocate or a write-no-allocate policy for the write-request based on the one or more execute permissions, if there is a write-miss in the cache for the write-request.

Yet another exemplary aspect is directed to a non-transitory computer-readable storage medium comprising code, which, when executed by a processor, causes the processor to perform operations for managing a cache, the non-transitory computer-readable storage medium comprising code for determining one or more execute permissions associated with a write-address of a write-request to the cache, and code for implementing a write-allocate or a write-no-allocate policy for the write-request based on the one or more execute permissions, if there is a write-miss in the cache for the write-request.

### BRIEF DESCRIPTION OF THE DRAWINGS

The accompanying drawings are presented to aid in the description of aspects of the invention and are provided solely for illustration of the aspects and not limitation thereof.
FIG. 1 depicts an exemplary block diagram of a processor system according to aspects of this disclosure.
FIG. 2 depicts an exemplary method for managing a cache according to aspects of this disclosure.
FIG. 3 depicts an exemplary wireless device in which an aspect of the disclosure may be advantageously employed.

### DETAILED DESCRIPTION

Aspects of the invention are disclosed in the following description and related drawings directed to specific aspects of the invention. The invention is set out in the appended independent claims. Advantageous embodiments are defined by the appended dependent claims.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the aspects described herein, the corresponding form of any such aspects may be described herein as, for example, "logic configured to" perform the described action.

Exemplary aspects of this disclosure are directed to a processing system comprising a cache. The cache is a unified cache configured to store data and instructions. The information (data/instructions) stored or to be stored in the unified cache may have associated read, write, and execute permissions. The read, write, and execute permissions may depend on the memory address associated with the information, or more generally, the memory page comprising the memory address.

In exemplary aspects, it is recognized that if the memory address has both write permission and execute permission associated with it, then the information associated with the memory address may have a high likelihood of future use. As previously mentioned, having write permission may be a basic condition for allowing the information to be written to the memory address. In an example, the information may be an instruction (written as data, using a data write operation, since write permission exists). The information may be fetched to be executed in the future (e.g., using an instruction fetch, since execute permission exists). Given that the information may be accessed for execution (or in other words, the memory address may be executed from) in future, if a write-miss occurs at the time of attempting to write the information to the unified cache, in exemplary aspects, a write-allocate policy may be implemented while servicing the write-miss. Otherwise, if execute permissions do not exist, the write-miss may be serviced based on a write-no-allocate policy. Thus, in exemplary aspects, execute permissions associated with a write-address may be used to determine cache allocation policy in the event of a write-miss for a write operation to the write-address.

In exemplary aspects, the unified cache may be accessed by one or more agents or processes. For example, the information may be written to the unified cache by a writing agent, also referred to herein as a "producing agent". The information may be executed, or more generally, "consumed" by an agent referred to herein as a "consuming agent". In some cases, the producing agent and the consuming agent may refer to processes of the same entity (e.g., a processor), while in some cases, the producing agent and the consuming agent may be different entities (e.g., different processors which can access the unified cache).

In a processing system, one or more processors, processes, or entities (e.g., which can access memory), may be operated under one or more privilege levels, such as a user privilege level, a supervisor privilege level, etc., as known in the art. For each privilege level, there may be corresponding read, write, and execute permissions associated each memory address or page. Thus, the producing agent and the consuming agent may be operated under the same or different privilege levels, and so the producing agent and consuming agent may have execute permissions which are based on their associated privilege levels.

When a write-request is generated by the producing agent, the consuming agent which may potentially consume the information which will be written by the producing agent may not be known. Thus, if the write-request results in a cache miss, then at the time of servicing the write-miss, the producing agent, as well as the privilege level of the producing agent may be known; however, the potential consuming agent may not be known, and therefore, the associated privilege level of the potential consuming agent may not be known. Accordingly, in some aspects, the write-allocation policy for a write-miss may be based on (e.g., a function of) execute permissions associated with the privilege level of the producing agent and/or execute permissions associated with any other privilege level for the write-address.

In some cases, the producing agent and the consuming agent (whether they are the same entity or different entities) may access the unified cache through a memory management unit (MMU). For example, the MMU may comprise a translation lookaside buffer (TLB) configured to cache translations of virtual addresses (supplied by the agents) to physical addresses (used for addressing memory locations in the unified cache as well as backing storage locations). The TLB may have one or more page table entries (PTEs) as previously discussed, wherein each PTE may comprise a virtual-to-physical address translation. In exemplary aspects, the PTE may be expanded to further include, along with a translation to a write-address for a write-request generated by the producing agent, the write and execute permissions associated with the write-address. The PTE comprising the write-address may include one or more execute permissions associated with the write-address, wherein the one or more execute permissions may pertain to execute permissions associated with one or more privilege levels.

For the sake of simplicity, exemplary aspects will be discussed with reference to a processing system comprising a processor and a unified cache, wherein the processor can be operated in one or more privilege levels, wherein each privilege level has associated read, write, and execute permissions. For the sake of simplicity, processes executable by the same processor may be referred to as a producing agent or a consuming agent based on the type of memory access request, but it will be understood the disclosed aspects can be easily extended to other variations where the producing agent and consuming agent may belong to different entities or processing units, without departing from the scope of this disclosure.

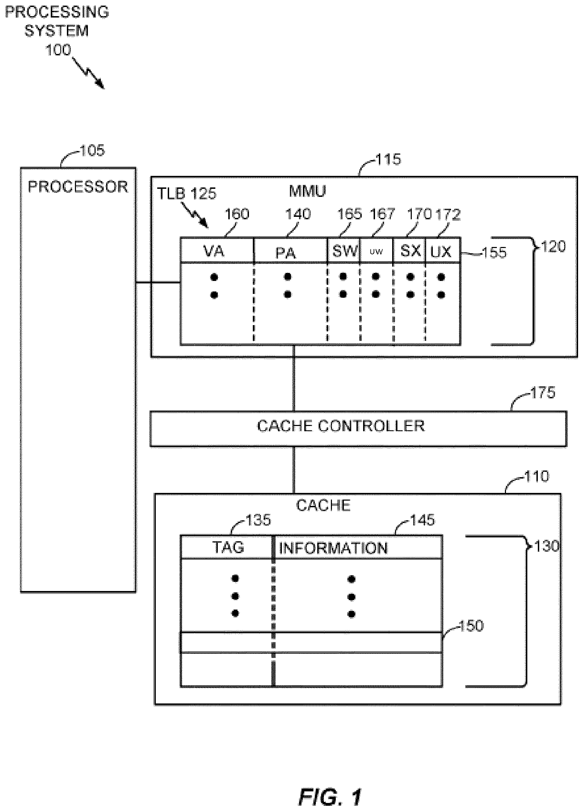

Accordingly, with reference to FIG. 1 an exemplary processing system 100 is illustrated, with processor 105, MMU 115 comprising TLB 125, and cache 110. Processor 105 can be any type of processor component such as a microprocessor, a general purpose processor, a central processing unit (CPU), a digital signal processor (DSP), a programmable logic device, etc. In exemplary aspects, processor 105 may be configured as a producing agent as well as a consuming agent, depending on the nature of transactions processed, or more specifically, depending on the type of memory access request generated by processor 105. In various alternatives, processor 105 may be operated under one or more privilege levels, such as a user privilege level, a supervisor privilege level, etc.

Cache 110 may be a level 1 (L1) cache, for example, and may be configured to cache information which may be consumed by processor 105. In various aspects, a cache controller identified by the reference numeral 175 may include logic and/or other means for controlling access to cache 110 and for implementing the various cache allocation policies for cache 110 according to aspects of this disclosure. Although not specifically illustrated, processing system 100 may comprise a memory system with one or more backing storage locations for cache 110 (e.g., a level 2 (L2) cache which can be shared with one or more other processors or processing cores which may also be present in processing system 100, a main memory, etc.). If there is a miss (e.g., read-miss or write-miss) in cache 110 for a memory access request generated by processor 105, then servicing the miss may involve accessing the one or more backing storage locations, in accordance with techniques known in the art, and so these techniques will not be discussed in exhaustive detail herein for the sake of conciseness. Aspects of this disclosure are directed to allocation in cache 110 upon a miss, and more specifically, write-allocation (e.g., write-allocate or write-no-allocate) upon a write-miss. Read-misses in cache 110 may be handled in a conventional manner, e.g., with allocation, and so, read-misses will also not be discussed in exhaustive detail in this disclosure.

In the invention cache 110 is configured as a unified cache, to store instructions as well as data. A producing agent of processor 105 may be able to write instructions in the form of data to cache 110. Subsequently the instructions in cache 110 may be fetched as instructions to be executed by a potential consuming agent of processor 105. The producing agent and a potential consuming agent may be operated under one or more privilege levels that are possible for processor 105, with each privilege level having associated read, write, and execute permissions.

Before accessing cache 110, write permissions for the producing agent for an intended write-address to which information is to be written may be determined, for example, by determining whether the privilege level (user/supervisor) under which the producing agent is operated has write permission for the write-address. Assuming the producing agent has write permission for the write-address to which the information is to be written to cache 110, if there is a write-miss, the corresponding write-miss may be serviced as a write-allocate or as a write-no-allocate (e.g., wherein the write-allocation policy may be implemented by cache controller 175) based on one or more of execute permissions associated with the write-address, e.g., execute permissions for a user privilege and/or execute permissions for a supervisor privilege. Examples of servicing the write-miss using a write-allocate policy and a write-no-allocate policy based on one or more functions or combinations of the one or more execute permissions will be described in detail in the following sections, while keeping in mind that determining the write-allocation policy can be based on various other combinations of the one or more execute permissions.

Although any cache architecture (e.g., direct mapped, fully associative, set associative, etc.) may be used for cache 110 without departing from the scope of this disclosure, cache 110 is shown in FIG. 1 as a direct mapped cache, for convenience of explanation. Thus, cache 110 is shown to comprise one or more cache lines or cache entries 130, wherein each cache entry 130 comprises tag 135 and information 145. Tag 135 is a field formed by a selected subset of bits of addresses (more specifically, physical addresses) at which corresponding information 145 is stored. Cache 110 can be indexed based on tags 135. For example, cache controller 175 may compare tag 135 of all cache entries 130 with corresponding bits of an address for which a cache access is desired (e.g., an address corresponding to a memory access request made by processor 105) and if there is a match with tag 135 of any cache entry 130, then there is a cache-hit and the cache entry whose tag 135 matches the address for the desired cache access is referred to as the hitting cache entry. If tags 135 of none of cache entries 130 match the address for the desired cache access, then there is a cache-miss.

If there is a cache-miss for a write-address corresponding to a write operation, or a write-miss, then in case a write-allocate policy is used to service the write-miss, a new cache entry may be created in cache 110 (which may involve any manner of creating a new cache entry or replacing an existing one by cache controller 175, using techniques such as a most recently used (MRU), least recently used (LRU), etc., as known in the art). Prior information corresponding to the write-address may be brought into cache 110 from a backing storage location where the write-address is found, and information corresponding to the write operation may be written to the new cache entry and tagged based on the write-address (more specifically, the tag may be based on a physical address translation of the write-address if the write-address is specified as a virtual address). In case a write-no-allocate policy is used, then servicing the write-miss involves writing the information to the backing storage location where the write-address is found, without creating a new cache entry and without writing the information in the new cache entry in cache 110. The various permissions which may be used in determining the write-allocation policy may be provided by MMU 115 in some aspects.

MMU 115 may be generally configured to manage access to cache 110 (e.g., in cooperation with cache controller 175), as well as access to other memories not explicitly shown. For the purposes of this disclosure, MMU 115 may comprise TLB 125 configured for address translation. Processor 105 may use virtual addresses in its operation, whereas cache 110, as well as other memories in processing system 100, may be indexed and accessed using physical addresses. TLB 125 may store a relatively small number of virtual-to-physical address translations which are likely to be used by processor 105, for example, to enable a fast address translation for memory access requests generated by processor 105. In this regard, TLB 125 may be populated according to known techniques to store address translations which have a high likelihood of future use by processor 105 (e.g., frequently used address translations, recently used address translations, etc.). If TLB 125 does not contain a translation for a particular memory access request (i.e., there is a "TLB-miss"), then a more time-consuming process of performing page table walks to determine the desired address translation may be undertaken by MMU 115, but techniques for populating TLB 125 and/or handling a TLB-miss are beyond the scope of this disclosure.

In the invention TLB 125 does include one or more TLB entries, also referred to as page table entries (PTEs), collectively designated by the reference numeral 120 in FIG. 1. Further details of an example PTE 155 of PTEs 120 are illustrated. PTE 155 is shown to comprise virtual address (VA) 160, a corresponding translation to physical address (PA) 140. Additionally, according to the invention TLB 125 does also include permission bits, such as supervisor write permission (SW) 165, user write permission (UW) 167, supervisor execute permission (SX) 170, and user execute permission (UX) 172. SW 165 and UW 167 are write (W) permissions associated with supervisor (S) and user (U) privilege levels for PA 140 (which may be a write-address, e.g., in a main memory), or more generally, for a memory page which comprises physical address 140. Similarly, SX 170 and UX 172 are execute (X) permissions associated with supervisor (S) and user (U) privilege levels for PA 140. PTE 155 can also include one or more read permission bits corresponding to physical addresses or memory pages, but these are not specifically shown or described because read accesses are not particularly discussed in this disclosure, as previously stated.

An example process for accessing cache 110, and more specifically for determining write-allocation according to exemplary aspects, will now be described with continued reference to FIG. 1. Accordingly, a particular memory access request generated by processor 105 (or a producing agent of processor 105) is considered. The memory access request may be a write-request to write information (e.g., write-data which comprises an instruction) to a write-address. Since processor 105 makes the write-request, the write-address may be expressed as a virtual address in the write-request. Assuming a TLB-hit for PTE 155 in TLB 125 for the write-request, PTE 155 comprises VA 160 and a corresponding translation to PA 140 for the write-address.

Additionally, PTE 155 also comprises SW 165 and UW 167 corresponding to PA 140. The privilege level (user/supervisor) of the producing agent which generated the write-request may be known when the write-request is generated. Therefore, the corresponding write permission, SW 165 or UW 167, is checked based on whether the privilege level of the producer is supervisor or user, respectively. If the corresponding write permission is not asserted (or de-asserted) then write permission for the write-request may not be available, and cache controller 175, for example, may not permit access of cache 110 for the write-request; the write-request may be terminated and/or an exception/error flag may be generated and handled in ways which are beyond the scope of this disclosure and therefore cache access may be avoided.

If the corresponding write permission is asserted, then the write-request may be processed as follows. Cache controller 175, for example, may consult or probe cache 110, using the write-address or PA 140. If any of cache entries 130 has tag 135 which matches corresponding bits of PA 140, then there is a cache-hit or write-hit and cache controller 175 can write the write-data to the hitting cache entry. If, on the other hand, none of tags 135 matched corresponding bits of PA 140, then there is a write-miss.

Processing the write-miss is based on SX 170 and UX 172. At the time of processing the write-miss, the potential consuming agent for the write-data may not be known. Therefore, one or more of the execute permissions SX 170 and UX 172 associated with the write-address may be considered, since the privilege level of a potential consuming agent which might execute the write-address may be one of a supervisor privilege or user privilege. One or more combinations of SX 170 and UX 172 will be described in detail in the following sections, in making the determination of whether to write-allocate or write-no-allocate in cache 110 while servicing the write-miss.

If, based on SX 170 and UX 172, the write-miss is determined to be serviced as a write-allocate, then one or more backing storage locations (e.g., L2 cache, L3 cache, main memory, etc.) are probed and the first backing storage location which comprises the write-address or PA 140 is accessed. The prior information stored in the backing storage location at PA 140 is read out and cache controller 175 may create new cache entry 150 in cache 110. Cache controller 175 may write the write-data to information 145 of the new cache entry 150, and set tag 135 of the new cache entry 150 based on bits of PA 140.

On the other hand, if, based on SX 170 and UX 172, the write-miss is determined to be serviced as a write-no-allocate, then one or more backing storage locations (e.g., L2 cache, L3 cache, main memory, etc.) are probed and the first backing storage location which comprises PA 140 is accessed. The prior information stored in the backing storage location at PA 140 overwritten with the first data, but a new cache entry 150 is not created in cache 110.

The functions or combinations of SX 170 and UX 172 upon which write-allocate or write-no-allocate determinations may be based, will now be described in greater detail. Once again, in the following examples, it will be assumed that the corresponding write permission (SW 165 or UW 167) based on the privilege level of the producing agent is asserted. Further, the producing agent's privilege level may be known, which means that the producing agent's execute permission associated with the known privilege level may also be known, however, the privilege level or execute permission associated with a potential consuming agent may not be known, but may be assumed to be one of SX 170 or UX 172.

In a first example, the write-miss may be serviced as a write-allocate only if SX 170 is asserted, i.e., only if there is execute permissions for supervisor privilege. In this example, the value of UX 172 may not be considered.

In a second example, the write-miss may be serviced as a write-allocate only if UX 172 is asserted, i.e., only if there is execute permissions for user privilege. In this example, the value of SX 170 may not be considered.

In a third example, the write-miss may be serviced as a write-allocate only if at least one of SX 170 or UX 172 is asserted, i.e., if there is execute permissions for supervisor privilege and/or user privilege.

In a fourth example, the write-miss may be serviced as a write-allocate only if the execute permission for the producing agent's privilege level is asserted (i.e., only if SX 170 or UX 172 is asserted based on whether the producing agent is operated in a supervisor privilege level or a user privilege level, respectively). For example, the producing agent may be operated under a supervisor privilege to produce instructions or code to be consumed or executed by potential consuming agents with supervisor privilege only (but not by potential consuming agents with user privilege); or the producing agent may be operated under a user privilege to produce instructions or code to be consumed or executed by potential consuming agents operated under user privilege only (but not by potential consuming agents with supervisor privilege). Thus, in these examples, the execute permission associated with a privilege level which is not the privilege level of the producing agent is not considered, but only the execute permission associated with the privilege level of the producing agent is considered.

In a fifth example, the write-miss may be serviced as a write-allocate only if the execute permission for the privilege level which is not the producing agent's privilege level is asserted (i.e., only if SX 170 or UX 172 is asserted based on whether the producing agent is operated in a user privilege level or a supervisor privilege level, respectively). Thus, this example, only the execute permission associated with a privilege level which is not the privilege level of the producing agent is considered, but the execute permission associated with the privilege level of the producing agent is not considered.

In addition to the above-enumerated examples, various other algorithms or logical functions of SX 170 and/or UX 172 may be devised, within the scope of this disclosure, in determining the write-allocation policy in the case of the write-miss.

Furthermore, in some aspects, in determining and implementing a write-allocation policy based on one or more execute permissions (e.g., SX 170 and/or UX 172 associated with the write-address or PA 140), cache controller 175, for example, may override an existing write-allocation policy or a default write-allocation policy. For example, a default write-no-allocate policy can be overridden to enforce write-allocate, or a default write-allocate policy can be overridden to enforce write-no-allocate for a write-miss based on one or more execute permissions associated with the write-address.

Accordingly, it will be appreciated that exemplary aspects of this disclosure can include any logic configured to determine one or more execute permissions associated with a write-address of a write-request to cache 110. In some aspects the logic can comprise MMU 115 as described above. However, in various alternative configurations of processing system 100, the logic configured to determine the one or more execute permissions need not include an MMU such as MMU 115. For example, the logic can include any other entity or unit, such as cache controller 175, used for controlling access to cache 110, wherein information regarding write and execute permissions for the various privilege levels (e.g., user/supervisor) may be provided to such logic. In some cases, address translation may not be performed for cache access, and so a TLB such as TLB 125 may be avoided; for example, if cache 110 is virtually tagged (i.e., using virtual address 160) supplied by memory access requests generated by processor 105, cache 110 may be accessed without a TLB and so the logic can include cache controller 175 configured to determine information pertaining to the above-described write and execute permissions for the various privilege levels (e.g., user/supervisor) which are possible. In some cases, where processor 105 may not use virtual addresses, the generated memory access requests may already be physical addresses and cache 110 may be a physically tagged cache (as shown in FIG. 1), and so the logic can comprise cache controller 175 configured to determine the above-described write and execute permissions. Other alternatives for cache access, cache configuration, and suitable logic configured to determine write and execute permissions for an intended write address to the cache are also possible, as will be recognized by one of skill in the art.

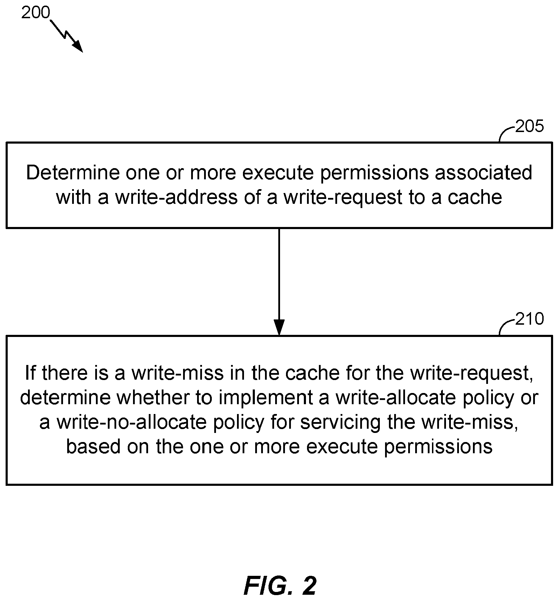

Accordingly, it will be appreciated that exemplary aspects include various methods for performing the processes, functions and/or algorithms disclosed herein. For example, FIG. 2 illustrates method 200 of managing a cache, such as cache 110 configured as a unified cache, to store data as well as instructions.

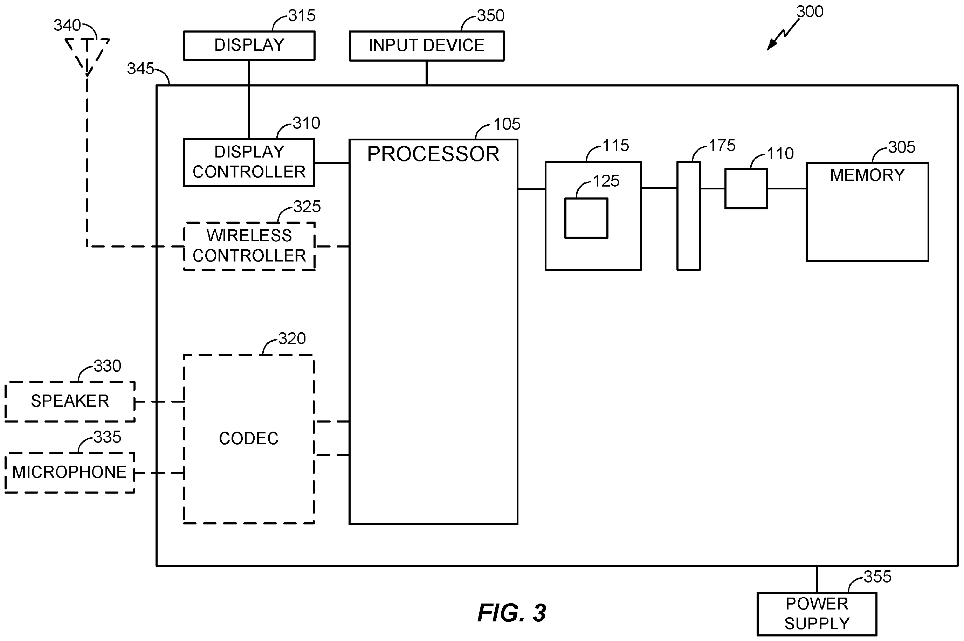

More specifically, Block 205 of method 200 comprises determining one or more execute permissions associated with a write-address of a write-request to the cache. For example, the one or more execute permissions associated with the write-address (e.g., physical address 140) may be based on execute permissions for one or more privilege levels (e.g., user/supervisor) associated with a memory page (e.g., of memory 305, shown and discussed with reference to FIG. 3 below) comprising the write-address. The one or more execute permissions can correspond to the execute permissions for a producing agent which generated the write-request and an execute permission of a potential consuming agent which may execute the write-address. The producing agent and the consuming agent may be processes of processor 105 configured to access cache 110. In some aspects, the one or more execute permissions associated with the write-address may be retrieved from a page table entry (e.g., PTE 155) of a translation lookaside buffer (e.g., TLB 125) comprising an address translation (e.g., physical address 140) for the write-address and the one or more execute permissions (e.g., SX 170, UX 172) associated with the write-address.

In Block 210, method 200 can include determining if there is a write-miss in the cache for the write-request (e.g., cache controller 175 may probe cache 110 using physical address 140). If there is a write-miss, cache controller 175, for example, may determine whether to implement a write-allocate policy or a write-no-allocate policy for servicing the write-miss, based on the one or more execute permissions.

It will be appreciated that the foregoing Blocks 205-210 are not limiting of the examples. As such, Blocks 205-215 can be combined and/or their order can be rearranged, as practicable.

FIG. 3 is a block diagram of a particular illustrative aspect of a computing device 300, according to exemplary aspects. Computing device 300 may be configured to perform method 200 of FIG. 2 in exemplary aspects. As shown, computing device 300 includes processor 105. MMU 115 comprising TLB 125, cache controller 175, and cache 110 as described with reference to FIG. 1 have been shown, although the additional details of these components that are shown in FIG. 1 are omitted from FIG. 3 for the sake of clarity. It will be understood that although aspects such as MMU 115 comprising TLB 125, cache controller 175, and cache 110 have been shown as components which are outside processor 105 in FIGS. 1 and 3, this arrangement is purely for the sake of illustration, and not to be construed as a limitation. For example, in some implementations, components such as MMU 115 comprising TLB 125, cache controller 175, or cache 110 may be configured within the block illustrated as processor 105. Skilled persons will recognize various other arrangements and configurations that are possible for processor 105, MMU 115 comprising TLB 125, cache controller 175, and cache 110 according to aspects of this disclosure.

FIG. 3 also shows memory 305, which may be a backing storage location for cache 110, such as main memory. Although not shown, one or more other caches or other memory structures may also be included in computing device 300. Also shown in FIG. 3 are display 315 and display controller 310, with display controller 310 coupled to processor 105 and to display 315.

In some aspects, FIG. 3 may include some optional blocks showed with dashed lines. For example, computing device 300 may optionally include coder/decoder (CODEC) 320 (e.g., an audio and/or voice CODEC) coupled to processor 105; speaker 330 and microphone 335 coupled to CODEC 320; and wireless controller 325 (which may include a modem) coupled to wireless antenna 340 and to processor 105.

In a particular aspect where one or more of the above-described optional blocks are present, processor 105, display controller 310, memory 305, CODEC 320, and wireless controller 325 can be included in a system-in-package or a system-on-chip device 345; and display 315, input device 350, speaker 330, microphone 335, wireless antenna 340, and power supply 355 may be external to system-on-chip device 345, and may be coupled to a component of system-on-chip device 345, such as an interface or a controller.

It should be noted that although FIG. 3 generally depicts a computing device, processor 105 and memory 305 may be integrated into a set top box, a music player, a video player, an entertainment unit, a navigation device, a personal digital assistant (PDA), a fixed location data unit, a server, a computer, a laptop, a tablet, a communications device, and a mobile phone, or other electronic devices. Further, at least one or more exemplary aspects of computing device 300 may be integrated in at least one semiconductor die.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

Accordingly, an aspect of the invention can include computer readable media embodying a method for managing a cache. Accordingly, the invention is not limited to illustrated examples and any means for performing the functionality described herein are included in embodiments of the invention.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method (200) for managing a unified cache configured to store data and instructions, wherein read, write and execute permissions are associated with entries of the unified cache and wherein the read, write and execute permissions depend on the memory address associated with the data or instructions to be stored in the unified cache, the method **characterized by**:
determining (205) whether a write-address of a write-request to the cache has one or more execute permissions (170, 172) associated therewith based on one or more permission bits stored in a page table entry, PTE, of a translation lookaside buffer, TLB, comprising an address translation for the write-address and the one or more permission bits associated with the write-address, wherein the permission bits include a supervisor execute permission bit and a user execute permission bit associated with supervisor and user privilege levels, respectively, associated with the write address, wherein an execute permission associated with the write-address indicates that an instruction stored at the write-address may be executed; and
if there is a write-miss in the cache for the write-request, determining whether to implement a write-allocate policy or a write-no-allocate policy for serving the write-miss based on the one or more execute permissions, comprising determining to implement a write-allocate policy if the write-address has one or more execute permissions associated therewith and determining to implement a write-no-allocate policy for servicing the write-miss, if the write-address does not have one or more execute permissions associated therewith.

2. The method of claim 1, wherein the one or more execute permissions associated with the write-address are based on one or more execute permissions associated with a memory page comprising the write-address.

3. The method of claim 1, wherein an execute permission of a producing agent which generated the write-request is based on a privilege level of the producing agent and an execute permission of a consuming agent configured to execute from the write-address is based on a privilege level of the consuming agent.

4. The method of claim 3, wherein the producing agent and the consuming agent are processes of a processor configured to access the cache.

5. The method of claim 3, further comprising determining whether the producing agent has write permission for the write-address before accessing the cache for the write-request.

6. The method of claim 1, wherein determining whether the write-address has one or more execute permissions associated therewith comprises retrieving the one or more permission bits from the PTE of the TLB.

7. The method of claim 1, wherein determining whether to write-allocate or write- no-allocate in the cache for servicing the write-miss comprises overriding an existing write-allocation policy for the cache.

8. An apparatus (100) comprising:
a unified cache (110) configured to store data and instructions, wherein read, write and execute permissions are associated with entries of the unified cache and wherein the read, write and execute permissions depend on the memory address associated with the data or instructions to be stored in the unified cache;
a memory management unit, MMU (115), the apparatus **characterized by**:
the MMU being configured to determine whether a write-address of the cache has one or more execute permissions associated therewith based on one or more permission bits stored in a page table entry, PTE, of a translation lookaside buffer, TLB, comprising an address translation for the write-address and the one or more permission bits associated with the write-address, the permission bits include a supervisor execute permission bit and a user execute permission bit associated with supervisor and user privilege levels, respectively, associated with the write address, wherein an execute permission associated with the write address indicates that an instruction stored at the write-address may be executed; and
the apparatus comprising a cache controller (175) configured to implement a write-allocate policy or a write-no-allocate policy for the write-request based on the one or more execute permissions, wherein the cache controller is configured to implement a write-allocate policy if the write address has one or more execute permissions associated therewith and is configured to implement a write-no-allocate policy if the write-address does not have one or more execute permissions associated therewith, if there is a write-miss in the cache for the write-request.

9. The apparatus of claim 8, wherein the one or more execute permissions associated with the write-address are based on one or more execute permissions associated with a memory page comprising the write-address.

10. A non-transitory computer-readable storage medium comprising code, which, when executed by the apparatus of claim 8, causes said apparatus to perform operations for managing a cache in accordance with any of claims 1 to 7.

## Patentansprüche

1. Ein Verfahren (200) zum Verwalten eines vereinheitlichten bzw. Unified Caches, der eingerichtet ist, Daten und Befehle zu speichern, wobei Lese-, Schreib- und Ausführungsberechtigungen mit Einträgen des vereinheitlichten Caches verbunden sind und wobei die Lese-, Schreib- und Ausführungsberechtigungen von der Speicheradresse abhängen, die mit den in dem vereinheitlichten Cache zu speichernden Daten oder Befehlen verbunden ist, wobei das Verfahren **gekennzeichnet ist durch**:
Bestimmen (205), ob eine Schreibadresse einer Schreibanforderung an den Cache eine oder mehrere Ausführungserlaubnisse (170, 172) aufweist, die damit assoziiert ist/sind, und zwar basierend auf einem oder mehreren Erlaubnisbits, die in einem Seitentabelleneintrag bzw. PTE (PTE = Page Table Entry) eines Übersetzungs-Lookaside-Puffers bzw. TLB (TLB = Table Lookaside Buffer) gespeichert sind, der eine Adressübersetzung für die Schreibadresse und das eine oder die mehreren Erlaubnisbits aufweist, die mit der Schreibadresse assoziiert sind, wobei die Erlaubnisbits ein Supervisorausführungs-Erlaubnisbit und ein Benutzerausführungs-Erlaubnisbit enthalten, die jeweils mit Supervisor- und Benutzerprivilegstufen assoziiert sind, und zwar assoziiert mit der Schreibadresse, wobei eine der Schreibadresse assoziierte Ausführungserlaubnis anzeigt, dass ein an der Schreibadresse gespeicherter Befehl ausgeführt werden darf; und
falls ein Write-Miss bzw. Schreib-Fehlschlag bzw. Schreibfehler im Cache für die Schreibanforderung vorliegt, Bestimmen, ob eine Write-Allocate- bzw. Schreib-Zuweisungs-Policy oder eine Write-No-Allocate- bzw. Schreib-Nicht-Zuweisungs-Policy zum Bedienen des Schreib-Fehlschlags zu implementieren ist, und zwar basierend auf der einen oder den mehreren Ausführungsberechtigungen, die Folgendes aufweisen:
Bestimmen, eine Schreib-Zuweisungs-Policy zu implementieren, falls mit der Schreibadresse eine oder mehrere Ausführungsberechtigungen assoziiert sind; und
Bestimmen, eine Schreib-Nicht-Zuweisungs-Policy zum Bedienen des Schreib-Fehlschlags zu implementieren, falls die Schreibadresse nicht über eine oder mehrere ihr zugeordnete Ausführungsberechtigungen verfügt.

2. Das Verfahren nach Anspruch 1, wobei die eine oder mehreren Ausführungsberechtigungen, die mit der Schreibadresse assoziiert sind, auf einer oder mehreren Ausführungserlaubnis(en) basiert bzw. basieren, die mit einer Speicherseite assoziiert sind, die die Schreibadresse aufweist.

3. Das Verfahren nach Anspruch 1, wobei eine Ausführungserlaubnis eines produzierenden Agenten, der die Schreibanforderung erzeugt hat, auf einer Privilegstufe des erzeugenden Agenten basiert und wobei eine Ausführungserlaubnis eines konsumierenden Agenten, der zur Ausführung von der Schreibadresse eingerichtet ist, auf einer Privilegstufe des konsumierenden Agenten basiert.

4. Das Verfahren nach Anspruch 3, wobei der produzierende Agent und der konsumierende Agent Prozesse eines Prozessors sind, der eingerichtet ist, auf den Cache zuzugreifen.

5. Das Verfahren nach Anspruch 3, das ferner Bestimmen aufweist, ob der produzierende Agent eine Schreibberechtigung für die Schreibadresse hat, und zwar vor dem Zugreifen auf den Cache für die Schreibanforderung.

6. Das Verfahren nach Anspruch 1, wobei das Bestimmen, ob die Schreibadresse eine oder mehrere Ausführungserlaubnisse aufweist, die damit assoziiert ist/sind, Abrufen des einen oder der mehreren Erlaubnisbits aus dem PTE der TLB aufweist.

7. Das Verfahren nach Anspruch 1, wobei das Bestimmen, ob schreibzuzuweisen oder schreib-nicht-zuzuweisen in den Cache zum Bedienen des Schreib-Fehlschlags aufweist, eine bestehende Schreib-Zuweisungs-Policy für den Cache zu überschreiben.

8. Eine Vorrichtung (100), die Folgendes aufweist:
einen vereinheitlichten bzw. Unified Cache (110), der eingerichtet ist zum Speichern von Daten und Befehlen, wobei Lese-, Schreib- und Ausführungsberechtigungen mit Einträgen des vereinheitlichten Caches assoziiert sind und wobei die Lese-, Schreib- und
Ausführungsberechtigungen von der mit den Daten oder Befehlen verbundenen Speicheradresse abhängen, die in dem vereinheitlichten Cache zu speichern sind;
eine Speicherverwaltungseinheit bzw. MMU (MMU = Memory Management Unit) (115), wobei die Vorrichtung **dadurch gekennzeichnet ist, dass**:
die MMU eingerichtet ist, zu bestimmen, ob eine Schreibadresse des Caches eine oder mehrere Ausführungserlaubnisse aufweist, die damit assoziiert ist/sind, und zwar basierend auf einem oder mehreren Erlaubnisbits, die in einem Seitentabelleneintrag bzw. PTE (PTE = Page Table Entry) eines Übersetzungs-Lookaside-Puffers bzw. TLB (TLB = Table Lookaside Buffer) gespeichert sind, der eine Adressübersetzung für die Schreibadresse und das eine oder die mehreren Erlaubnisbits aufweist, die mit der Schreibadresse assoziiert sind, wobei die Erlaubnisbits ein Supervisorausführungs-Erlaubnisbit und ein Benutzerausführungs-Erlaubnisbit enthalten, die jeweils mit Supervisor- und Benutzerprivilegstufen assoziiert sind, und zwar assoziiert mit der Schreibadresse, wobei eine der Schreibadresse assoziierte Ausführungserlaubnis anzeigt, dass ein an der Schreibadresse gespeicherter Befehl ausgeführt werden darf; und
die Vorrichtung einen Cache-Controller (175) aufweist, der eingerichtet ist, eine Write-Allocate- bzw. Schreib-Zuweisungs-Policy oder eine Write-No-Allocate- bzw. Schreib-Nicht-Zuweisungs-Policy für die Schreibanforderung zu implementieren, und zwar basierend auf der einen oder den mehreren Ausführungsberechtigungen, wobei der Cache-Controller eingerichtet ist, eine Schreib-Zuweisungs-Policy zu implementieren, falls die Schreibadresse eine oder mehrere Ausführungsberechtigungen besitzt, die mit ihr assoziiert sind, und wobei der Cache-Controller eingerichtet ist, eine Schreib-Nicht-Zuweisungs-Policy zu implementieren, falls die Schreibadresse nicht über eine oder mehrere mit ihr assoziierte Ausführungsberechtigungen verfügt, wenn im Cache ein Write-Miss bzw. Schreib-Fehlschlag bzw. Schreibfehler für die Schreibanforderung vorliegt.

9. Die Vorrichtung nach Anspruch 8, wobei die eine oder mehreren Ausführungsberechtigungen, die mit der Schreibadresse assoziiert sind, auf einer oder mehreren Ausführungsberechtigungen basieren, die mit einer Speicherseite verbunden sind, die die Schreibadresse aufweist.

10. Ein nicht-transitorisches, computerlesbares Speichermedium, das einen Code aufweist, der, wenn er von der Vorrichtung nach Anspruch 8 ausgeführt wird, die Vorrichtung veranlasst, Operationen zum Verwalten eines Cachespeichers gemäß einem der Ansprüche 1 bis 7 auszuführen.

## Revendications

1. Procédé (200) de gestion d'une mémoire cache unifiée qui est configurée pour stocker des données et des instructions, dans lequel des autorisations de lecture, d'écriture et d'exécution sont associées à des entrées de la mémoire cache unifiée et dans lequel les autorisations de lecture, d'écriture et d'exécution dépendent de l'adresse mémoire associée à les données ou instructions à stocker dans la mémoire cache unifiée, le procédé étant **caractérisé par** les étapes consistant à :
déterminer (205) si une adresse d'écriture d'une demande d'écriture dans la mémoire cache possède une ou plusieurs autorisations d'exécution (170, 172) qui lui sont associées sur la base d'un ou plusieurs bits d'autorisation stockés dans une entrée de table de pages, PTE, d'une mémoire tampon des adresses traduites, TLB, comprenant une traduction d'adresse pour l'adresse d'écriture et le ou les bits d'autorisation associés à l'adresse d'écriture, dans lequel les bits d'autorisation comprennent un bit d'autorisation d'exécution de superviseur et un bit d'autorisation d'exécution d'utilisateur associés aux niveaux de privilège de superviseur et d'utilisateur, associés respectivement, à l'adresse d'écriture, dans laquelle une autorisation d'exécution associée à l'adresse d'écriture indique qu'une instruction stockée à l'adresse d'écriture peut être exécutée ; et
s'il y a un échec d'écriture dans la mémoire cache pour la demande d'écriture, déterminer s'il faut mettre en œuvre une politique d'écriture avec allocation ou une politique d'écriture sans allocation pour servir l'échec d'écriture sur la base de la ou des autorisations d'exécution, comprenant les étapes consistant à déterminer de mettre en œuvre une politique d'écriture avec allocation si l'adresse d'écriture possède une ou plusieurs autorisations d'exécution qui lui sont associées et déterminer de mettre en œuvre une politique d'écriture sans allocation en mémoire sans chargement dans la mémoire cache pour traiter l'échec d'écriture, si l'adresse d'écriture n'a pas une ou plusieurs autorisations d'exécution qui y sont associées.

2. Procédé selon la revendication 1, dans lequel la ou les autorisations d'exécution associées à l'adresse d'écriture sont basées sur une ou plusieurs autorisations d'exécution associées à une page mémoire comprenant l'adresse d'écriture.

3. Procédé selon la revendication 1, dans lequel une autorisation d'exécution d'un agent producteur qui a généré la demande d'écriture est basée sur un niveau de privilège de l'agent producteur et une autorisation d'exécution d'un agent consommateur qui est configuré pour exécuter à partir de l'adresse d'écriture est basée sur un niveau de privilège de l'agent consommateur.

4. Procédé selon la revendication 3, dans lequel l'agent producteur et l'agent consommateur sont des processus d'un processeur configuré pour accéder à la mémoire cache.

5. Procédé selon la revendication 3, comprenant en outre la détermination si l'agent producteur possède une autorisation d'écriture pour l'adresse d'écriture avant d'accéder à la mémoire cache pour la demande d'écriture.

6. Procédé selon la revendication 1, dans lequel l'étape consistant à déterminer si l'adresse d'écriture possède une ou plusieurs autorisations d'exécution qui lui sont associées comprend la récupération du ou des bits d'autorisation du PTE de la TLB.

7. Procédé selon la revendication 1, dans lequel l'étape consistant à déterminer s'il faut mettre en œuvre une écriture avec allocation ou une écriture sans allocation dans la mémoire cache pour traiter l'échec d'écriture comprend l'étape consistant à outrepasser une politique d'écriture avec allocation existante pour la mémoire cache.

8. Appareil (100) comprenant :
une mémoire cache unifiée (110) configurée pour stocker des données et des instructions, dans lequel les autorisations de lecture, d'écriture et d'exécution sont associées aux entrées de la mémoire cache unifiée et dans lequel les autorisations de lecture, d'écriture et d'exécution dépendent de l'adresse mémoire associée aux données ou aux instructions à stocké dans la mémoire cache unifiée,
une unité de gestion de mémoire, MMU, (115), l'appareil étant **caractérisé par** les faits que :
la MMU est configurée pour déterminer si une adresse d'écriture de la mémoire cache possède une ou plusieurs autorisations d'exécution qui lui sont associées sur la base d'un ou plusieurs bits d'autorisation stockés dans une entrée de table de pages, PTE, d'une mémoire tampon des adresses traduites, TLB, comprenant une traduction d'adresse pour l'adresse d'écriture et le ou les bits d'autorisation associés à l'adresse d'écriture, les bits d'autorisation comprennent un bit d'autorisation d'exécution de superviseur et un bit d'autorisation d'exécution d'utilisateur associés aux niveaux de privilège de superviseur et d'utilisateur, respectivement, associés à l'adresse d'écriture, dans lequel une autorisation d'exécution associée à l'adresse d'écriture indique qu'une instruction stockée à l'adresse d'écriture peut être exécutée; et
l'appareil comprend un contrôleur de cache (175) configuré pour mettre en œuvre une politique d'écriture avec allocation ou une politique d'écriture sans allocation pour la demande d'écriture sur la base de la ou des autorisations d'exécution, dans lequel le contrôleur de cache est configuré pour mettre en œuvre une politique d'écriture avec allocation si l'adresse d'écriture possède une ou plusieurs autorisations d'exécution qui lui sont associées et est configurée pour mettre en œuvre une politique d'écriture sans allocation si l'adresse d'écriture n'a pas une ou plusieurs autorisations d'exécution qui lui sont associées, s'il y a un échec d'écriture dans la mémoire cache pour la demande d'écriture.

9. Appareil selon la revendication 8, dans lequel la ou les autorisations d'exécution associées à l'adresse d'écriture sont basées sur une ou plusieurs autorisations d'exécution associées à une page mémoire comprenant l'adresse d'écriture.

10. Support non transitoire de stockage lisible par ordinateur comprenant un code qui, lorsqu'il est exécuté par l'appareil de la revendication 8, amène ledit appareil à effectuer des opérations de gestion de mémoire cache conformément à l'une quelconque des revendications 1 à 7.
